# EUROPÄISCHE PATENTSCHRIFT

(11) **EP 2 228 573 B1**
(45) Veröffentlichungstag und Bekanntmachung des Hinweises auf die Patenterteilung: **27.11.2013**
(21) Anmeldenummer: 10002475.1
(22) Anmeldetag: 10.03.2010
(51) Int. Cl.: F16K 1/30, F16K 31/04

(54) **Ventilantrieb für Gasventile**
Valve gear for gas valves
Mécanisme de distribution pour vanne de gaz

(30) Priorität: 10.03.2009 DE 102009012405
(43) Veröffentlichungstag der Anmeldung: 15.09.2010
(73) Patentinhaber: Karl Dungs GmbH & Co.KG, 73660 Urbach (DE)
(72) Erfinder: Forster, Joachim, 71364 Winnenden (DE)
(74) Vertreter: Rüger, Barthelt & Abel

(56) Entgegenhaltungen:
- DE-A1- 2 134 636
- US-A- 4 613 798
- US-A- 5 364 066
- US-A1- 2004 211 373

## Beschreibung

Die Erfindung betrifft einen Ventilantrieb, der insbesondere zum Einsatz an Gasventilen mit Selbstschlusscharakteristik zweckmäßig einzusetzen ist.

Während die Ventilantriebe kleinerer Gasventile meist durch Elektromagnetantriebe gebildet werden, sind bei Gasventilen größerer Leistung als Antriebe häufig Stellmotoren in Gebrauch. Der Stellmotor wirkt dann durch ein geeignetes Getriebe auf die Ventilspindel bzw. das Ventilverschlussglied, um dieses von einem Ventilsitz weg in Öffnungsrichtung oder auf den Ventilsitz hin in Schließrichtung zu bewegen. Zum Schließen des Ventils setzt das Ventilverschlussglied auf dem Ventilsitz auf. Hierbei stoppt der Motor. Er muss dazu entsprechend abgebremst werden. Geschieht die nicht, kann der Ventilsitz durch die kinetische Energie des Motors und die daraus resultierende beim Auftreffen des Ventilverschlussglieds auftretende Kraft überlastet werden. Das kann zu Schaden an dem Ventilsitz und/oder dem Ventilverschlussglied führen.

Aus US 2004/0211373 ist Ventilantrieb für ein Ventil bekannt. Das weist einen Ventilsitz und ein Ventilverschlussglied auf, das im Schließzustand auf dem Ventilsitz ruht und in Offenstellung von dem Ventilsitz weg bewegt ist. Dem Ventilverschlussglied ist eine Antriebsfeder zugeordnet, die daszu dient, das Ventilverschlussglied vom Ventilsitz weg zu bewegen. Einem Antriebsmotor ist mit einem Getriebe zur Übertragung der Antriebsbewegung von dem Antriebsmotor auf das Ventilverschlussglied verbunden. Das Getriebe weist zur Übertragung einer Schließbewegung auf das Ventilverschlussglied einen Stößel auf, der an einer axial verschiebbaren Spindelmutter angeordnet ist. Das Ventilverschlussglied ist relativ zum Stößel bzw. der Spindelmutter axial verschiebbar, so dass das Getriebe in Richtung des Schließens des Ventils einen Freigang oder Freilauf aufweist de. Der Stößel kann keine Schließkraft auf das Ventilverschlussglied erzeugen. Diese Schließkraft wird durch die Druckdifferenz am Ventilsitz erreicht.

Ferner offenbart DE 2 134 636 A1 einen elektromotorischen Antrieb für Ventile mit einer Kette als Übertragungsglied zwischen dem Ventilverschlussglied und dem Antriebsmotor. Über eine solche Kette kann ein Freilauf in eine Richtung erreicht werden, das die Kette lediglich Zugkräfte übertragen kann.

Davon ausgehend, ist es Aufgabe der Erfindung einen verbesserten Ventilantrieb zu schaffen.

Diese Aufgabe wird durch den Ventilantrieb nach Anspruch 1 gelöst:

Der erfindungsgemäße Ventilantrieb eignet sich zum Antrieb von Einzelventilen, Doppelventilen, Klappen oder ähnlichen Stellarmaturen. Er weist zumindest einen Antriebsmotor auf, der über ein Getriebe mit dem Ventilverschlussglied des Ventils verbunden ist. Das Getriebe enthält einen in Schließrichtung des Ventils wirksamen Freigang. Während das Ventilverschlussglied der von dem Antriebsmotor vorgegebenen Bewegung beim Öffnen des Ventils ohne weiteres folgt, bewirkt der Freigang, dass sich der Antriebsmotor beim Schließen des Ventils nach dem Aufsetzen des Ventilverschlussglieds auf seinen Ventilsitz in gleicher Schließrichtung weiter bewegen kann, ohne dass das Ventilverschlussglied den Antriebsmotor abbremsen müsste. Der Freigang bewirkt ein Abkoppeln der Trägheit des Antriebs von dem Ventilverschlussglied nach dem Aufsetzen desselben.

Ein solcher Freigang kann beispielsweise geschaffen werden, indem in oder an dem Getriebe an geeigneter Stelle, zum Beispiel zwischen dem Getriebe und dem Motor, eine Freilaufkupplung angeordnet wird. Vorzugsweise wird der Freigang jedoch möglichst an einer dem Ventilverschlussglied nahen Stelle angeordnet, um einen möglichst großen Teil der Massenträgheit des Antriebs von dem Ventilverschlussglied fern zu halten.

...[Absatz gestrichen] Der Freigang ist dabei vorzugsweise wenigstens so groß wie der Bremsweg des Antriebsmotors, d.h. der Weg, den der Antriebsmotor oder das Betätigungsglied nach dem Aufsitzen des Ventilverschlussglieds beim Schließen des Ventils noch zurücklegt.

Die genannten Maßnahmen gestatten die Nutzung von relativ kleinen Schrittmotoren oder anderen elektrischen Kleinantrieben zur Betätigung relativ großer Ventile. Das zwischen dem Antriebsmotor und dem Ventilverschlussglied vorhandene Getriebe kann eine erhebliche Untersetzung aufweisen. Eine solche Untersetzung bewirkt die Erzeugung großer Antriebskräfte an dem Ventilverschlussglied bei geringen Antriebskräften oder Antriebsdrehmomenten des Antriebsmotors. Der Antriebsmotor läuft entsprechend mit relativ hoher Drehzahl. Er speichert dabei erhebliche kinetische Energie, die durch den oben genannten Freigang aber von dem Ventilsitz ferngehalten wird.

Weiter gestattet der Freigang einen Schnellschluss des Ventils und zwar sowohl motorunterstützt als auch in stromlosem Zustand. Durch den Schnellschluss sich im Ventilantrieb aufbauende kinetische Energie wird nicht durch Aufsetzen des Ventilverschlussglieds auf dem Ventilsitz abgebaut, sondern indem der Antrieb innerhalb des Freigangs ausläuft.

Der Freigang wird bei dem Ventil, das durch Schub an der Ventilspindel zu öffnen und durch Bewegung in Gegenrichtung zu schließen sind, erhalten, indem der Ventilantrieb schlicht auf eine Stirnfläche oder anderweitige Endfläche der Ventilspindel drückt, um das Ventil zu öffnen. Beim Schließen kann ein auf die Ventilspindel drückender Stößel des Getriebes zunächst mit der Ventilspindel zusammen in Schließrichtung laufen. Dazu kann die Ventilspindel durch eine Schließfeder in Schließrichtung vorgespannt sein. Nach Aufsetzen des Ventilverschlussglieds auf dem Ventilsitz bleibt die Ventilspindel stehen, während der Stößel noch weiter laufen kann und dabei von der Stirnfläche der Ventilspindel (oder einer anderweitigen entsprechenden Anlagefläche) abhebt und noch ein Stück weiter läuft.

Das Getriebe ist vorzugsweise selbsthemmungsfrei ausgeführt und weist beispielsweise eine auf einer Spindel gelagerte Spindelmutter auf, wobei entweder die Spindelmutter oder die Spindel den Stößel aufweisen. Der Stößel liegt vorzugsweise nur in der Offenstellung des Ventilverschlussgliedes an der Ventilspindel an. Die Gewindesteigung der Spindel ist so gewählt, dass durch die Kraft der Schließfeder eine Drehung zwischen Spindelmutter und Spindel bewirkt werden kann. Ohne Antriebskraft an der Spindel oder der Spindelmutter wird mithin das Ventilverschlussglied durch die Schließfeder in die Schließstellung bewegt. Bei einer bevorzugten Ausführung ist die Spindel und/oder die Spindelmutter koaxial zur Ventilspindel angeordnet, wodurch sich eine radial dazu gesehen kleine Bauform ergibt.

Außerdem kann der Freigang durch eine sogenannten "Getriebelose" erzeugt werden. Eine Getriebelose wird durch Verbindungsglieder gebildet, die in Kraftübertragungsrichtung ein Spiel haben, das größer ist als der Bremsweg des Antriebsmotors. Der Bremsweg ist dabei der an den betreffenden Gliedern beim Bremsen des Antriebsmotors auftretende Weg.

Weitere Abwandlungen sind möglich. Vorteilhafte Details von Ausführungsformen ergeben sich außerdem aus der Zeichnung, der Beschreibung oder Unteransprüchen. Die Beschreibung beschränkt sich auf wesentliche Aspekte der Erfindung und sonstiger Gegebenheiten. Die Zeichnung ergänzt die Beschreibung. Es zeigen:
Figur 1 ein Ventil mit Ventilantrieb in schematischer Prinzipdarstellung im Schließzustand,
Figur 2 das Ventil nach Figur 1, in Offenzustand,
Figur 3 das Ventil nach Figur 1 und 2, nach einem Schnellschluss.
Figur 4 die Ventilöffnungs- und Schließbewegung als Diagramm,
Figur 5 eine abgewandelte Ausführungsform eines Ventilantriebs in schematischer Darstellung in Offenstellung,
Figur 6 den Ventilantrieb nach Figur 5 nach Schnellschluss des Ventils,
Figur 7 eine weitere abgewandelte Ausführungsform eines Ventilantriebs an einem Ventil in Offenstellung,
Figur 8 das Ventil und den Ventilantrieb nach Figur 7 nach einem Schließvorgang,
Figur 9 einen Ventilantrieb an einem Ventil in Schließstellung,
Figur 10 die Ausführungsform nach Figur 9 in Schließstellung,
Figur 11 eine Ausführungsform eines erfindungsgemäßen Ventilantriebs in schematischer Querschnittsdarstellung mit einer axial verschiebbaren Spindel und
Figur 12 eine Abwandlung der Ausführungsform des erfindungsgemäßen Ventilantriebs aus Figur 12 mit einer axial verschiebbaren Spindelmutter.

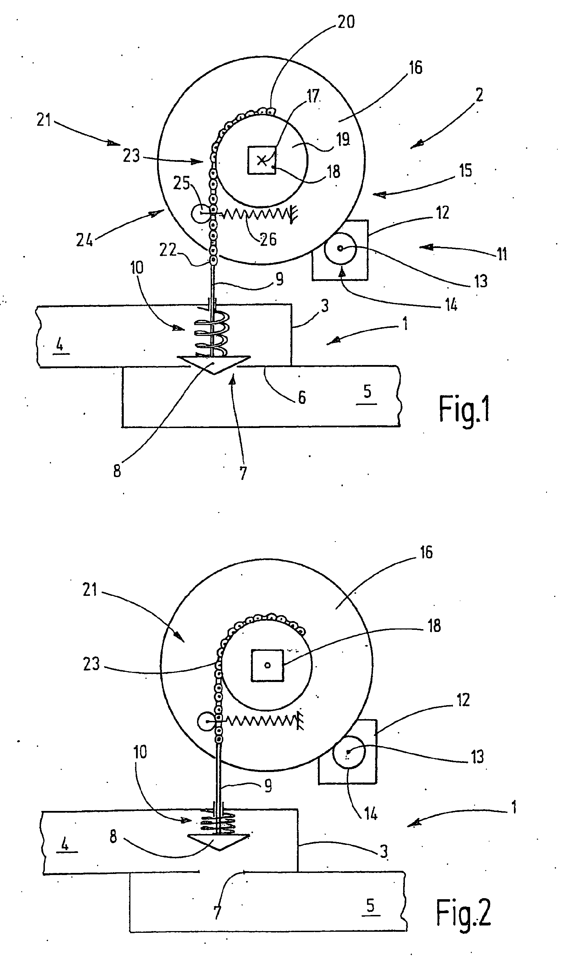

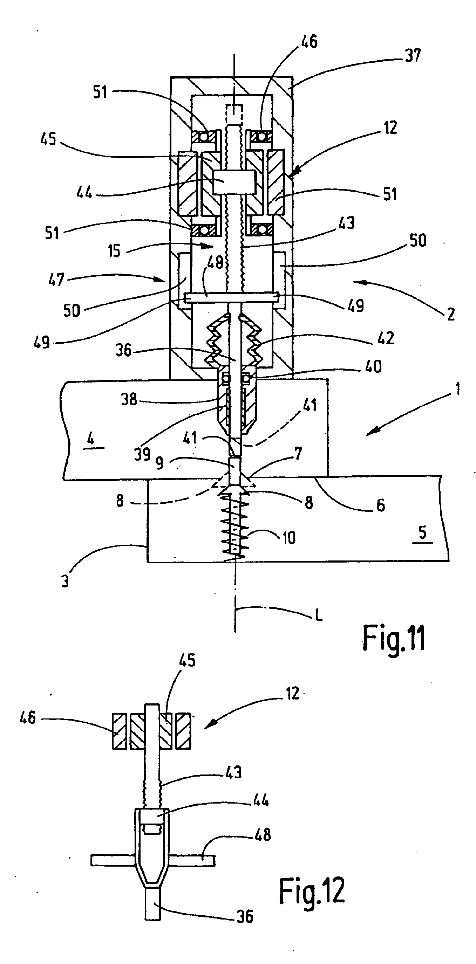

In den Figuren 1 bis 10 sind verschiedene Ventilantriebe dargestellt. Die Figuren 11 und 12 zeigen Ausführungsformen eines erfindungsgemäßen Ventilantriebs.

In Figur 1 ist ein Gasventil 1 mit einem Ventilantrieb 2 schematisch veranschaulicht. Das Gasventil 1 umfasst ein Ventilgehäuse 3 mit einem Eingang 4 und einem Ausgang 5. Zwischen beiden ist eine Gehäusewand 6 mit einem Ventilsitz 7 angeordnet. Dieser wird beispielsweise durch eine in der Gehäusewand 6 ausgebildete Öffnung gebildet.

Dem Ventilsitz 7 ist ein Ventilverschlussglied 8 zugeordnet, das von einer Ventilspindel 9 getragen sein kann. Diese ist abgedichtet aus dem Gehäuse 3 herausgeführt. Im vorliegenden Ausführungsbeispiel ist das Ventilverschlussglied 8, das einen größeren Durchmesser als der von dem Ventilsitz umgrenzte Durchgang aufweist, auf der Seite des Eingangs 4 angeordnet. Auf dieser Seite ist auch die Ventilspindel 9 angeordnet, so dass sie aus dem Gehäuse 3 herausgezogen werden muss, um das Ventil zu öffnen. Um das Gasventil 1 in Schließstellung zu halten oder in Schließstellung zu bewegen, ist eine Schließfeder 10 vorgesehen, die sich im vorliegenden Ausführungsbeispiel zwischen dem Ventilgehäuse 3 und dem Ventilverschlussglied 8 abstützt. Sie kann konzentrisch zu der Ventilspindel 9 angeordnet und als Schraubenfeder ausgebildet sein. Andere Ausführungen der Schließfeder 10 sind möglich, so lange sie dazu geeignet sind, das Ventilverschlussglied 8 gegen den Ventilsitz 7 zu drücken und einen entsprechenden Öffnungshub zuzulassen.

Der Ventilantrieb 2 weist einen Antriebsmotor 11 auf, der beispielsweise als Schrittmotor 12 ausgebildet sein kann. Als Abtrieb dient ihm eine Welle 13, die zum Beispiel ein Ritzel 14 trägt. Der Antriebsmotor 11 dient zum Antrieb des Ventilverschlussglieds 8 vermittels eines Getriebes 15. Das Getriebe 15 setzt die Drehbewegung der Welle 13 in eine Linearbewegung der Ventilspindel 9 um. Es weist eine Untersetzungscharakteristik auf. Dies bedeutet, dass die an der Ventilspindel 9 wirksam werdende Kraft größer ist als die an dem Ritzel 14 wirkende Umfangskraft.

Zu dem Getriebe 15 gehören das Ritzel 14 und ein mit diesem kämmendes Zahnrad 16, dessen Durchmesser vorzugsweise größer als der Durchmesser des Ritzels 14 ist. Das Zahnrad 16 ist in einem nicht weiter veranschaulichten Antriebsgehäuse um eine Achse 17 drehbar gelagert. Außerdem kann eine mit dem Zahnrad 16 starr verbundene konzentrisch zu der Achse 17 angeordnete Welle mit einem Positionssensor 18 zum Beispiel in Gestalt eines Drehgebers zusammenwirken, um die aktuelle Position des Zahnrads 16 zu erfassen.

Das Zahnrad 16 ist beispielsweise drehfest mit einer Wickeltrommel, Wickelwelle oder einem weiteren Rad 19 gekoppelt, das als Wickelspule oder auch als Kettenrad ausgebildet sein kann. An diesem Rad 19 ist ein Ende 20 eines Zugmittels 21 befestigt, dessen anderes Ende 22 mit der Ventilspindel 9 verbunden ist. Das Zugmittel 21 kann, wie dargestellt, als Kette, alternativ aber auch als Seil, als Stahlband oder ähnliches in Zugrichtung starres ansonsten aber flexibles Zugmittel ausgebildet sein. Im vorliegenden Ausführungsbeispiel wird das Zugmittel 21 durch eine Rollenkette 23 gebildet. Sie weist zumindest zwei parallel zueinander angeordnete Reihen sich gegenseitig überlappender Laschen auf, die untereinander durch Rollen tragende Nieten verbunden sind. Die Rollenkette 23 ist dabei so angeordnet, dass sie von dem Rad 19 wenigstens teilweise aufgewickelt werden kann, dessen Durchmesser vorzugsweise kleiner als der Durchmesser des Zahnrads 16 ist.

Dem Zugmittel 21 kann eine Spanneinrichtung 24 zugeordnet sein. Zu diesem kann eine Rolle 25 gehören, die durch eine Feder 26 in einer solchen Richtung quer zu dem Zugmittel 21 vorgespannt ist, in der das Zugmittel 21 flexibel ist. Die Rolle 25 ist dabei vorzugsweise zwischen dem Ablaufpunkt des Zugmittels 21 von dem Rad 19 und dem Ende 22 angeordnet.

Der insoweit beschriebene Ventilantrieb 1 arbeitet wie folgt:

In Figur 1 ist das Gasventil 1 geschlossen. Die Schließfeder 10 drückt das Ventilverschlussglied 8 auf den Ventilsitz 6 und hält es in Schließstellung. Das Zugmittel 21 ist weitgehend gestreckt, wobei es jedoch keine nennenswerte Spannung aufbaut.

Soll das Gasventil 1 nun geöffnet werden, wird der Schrittmotor 12 entsprechend angesteuert. Er dreht das Ritzel 14 und dadurch mit entsprechend geringere Winkelgeschwindigkeit das Zahnrad 16. Infolgedessen dreht auch das drehfest mit diesem gekuppelte Rad 19 in Figur 1 in Uhrzeigersinn und wickelt dadurch die Rollenkette 23 oder ein anderes entsprechendes Zugmittel 21 etwas auf. Das Zugmittel 21 zieht dadurch an der Ventilspindel 19 und öffnet das Ventil gegen die Kraft der Schließfeder 10, wie Figur 2 zeigt. Das Ventil geht dadurch in Offenstellung. Das Ventilverschlussglied 8 ist in dieser Offenstellung von dem Ventilsitz 7 weg bewegt. Es kann Gas von dem Eingang 4 zu dem Ausgang 5 strömen. Die komprimierte Schließfeder 10 spannt das Zugmittel 21. Durch entsprechendes Rechts- oder Linksdrehen der Welle 13 des Schrittmotors 12 kann der Gasstrom moduliert, d.h. das Gasventil 18 mehr oder weniger weit geöffnet werden. Die Position des Ventilverschlussglieds 8 ist über dem Positionssensor 18 mittelbar erfassbar.

Alternativ zu dem Positionssensor 18, der die Drehstellung des Zahnrads 16 erfasst, kann auch ein Positionssensor in oder an dem Gasventil 1 vorgesehen sein, um die Position der Ventilspindel 9 und/oder des Ventilverschlussglieds 8 direkt oder indirekt zu erfassen.

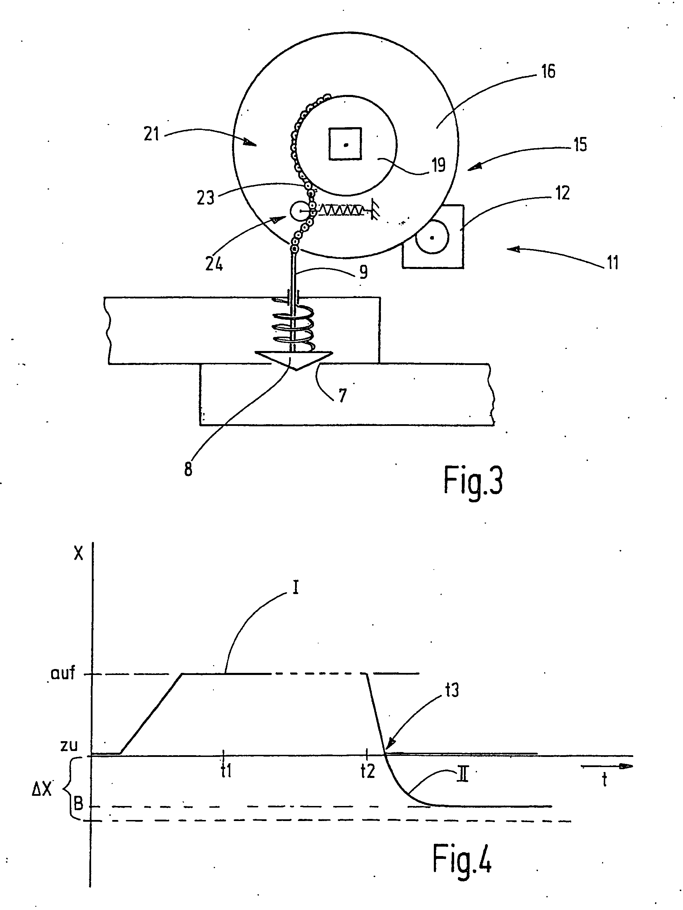

Der Schrittmotor 12 weist ein vorzugsweise geringes Rastmoment auf, das trotz vorhandener Getriebeuntersetzung nicht ausreicht, um die Kraft die Schließfeder 10 überwinden und das Ventil offen zu halten. Deshalb schließt das Gasventil 1 automatisch, wenn der Schrittmotor 12 stromlos wird. Es wird zur Erläuterung eines solchen Vorgangs nachfolgend davon ausgegangen, dass das Gasventil 1 in voll offenem Zustand war. In diesem hat das Ventilverschlussglied 8 seine größtmögliche Entfernung von dem Ventilsitz 7. Dies entspricht einem Zeitpunkt t1 in dem Diagramm nach Figur 4. Die dort vorhandene Kurve I markiert zunächst das Öffnen und dann das Offenstehen des Gasventils. Die senkrechte Achse des Diagramms veranschaulicht die Position des Ventilverschlussglieds 8.

Zu dem Zeitpunkt t2 wird der Schrittmotor 12 stromlos. Die Schließfeder 10 beschleunigt nun das Ventilverschlussglied 8 in Richtung auf den Ventilsitz 7, wobei über die Ventilspindel 9 und das Zugmittel 21 das Zahnrad 16 und der Rotor des Schrittmotor 12 mitgeschleppt d.h. drehbeschleunigt werden. Zu einem Zeitpunkt t3 setzt das Ventilverschlussglied 8 auf dem Ventilsitz 7 auf, womit das Gasventil 1 ganz geschlossen ist. An dem Ventilsitz 7 schlagen aber nur das Ventilverschlussglied 8 und die mit ihm unmittelbar verbundene Ventilspindel 9 an. Der Schrittmotor 12 und das an ihn angeschlossene Getriebe laufen hingegen durch den vorhandenen Freigang Δx gewissermaßen "ins Leere".

Nachdem das Ventilverschlussglied 8 auf dem Ventilsitz 7 aufgesessen ist und das Zahnrad 16 mit einigem Schwung noch weiter dreht, erschlafft das Zugmittel 21, wie es Figur 3 veranschaulicht. Die optional vorhandene Spanneinrichtung 24 sorgt dabei dafür, dass die Kette 23 definiert an dem Rad 19 anliegend gehalten wird. Vorhandene Reibung elektrische Dämpfung und sonstige Bremseinflüsse führen nun dazu, dass der Schrittmotor 12 in einem Bremsweg B ausläuft. Als Bremsweg wird dabei derjenige Weg verstanden, den die Ventilspindel 9 noch zurückgelegt hätte, wenn das Ventilverschlussglied 8 nicht auf dem Ventilsitz 7 aufgesessen wäre. Wie aus Figur 4 ersichtlich ist, ist der maximale der Freigang Δx zumindest etwas größer als der Bremsweg B. Mit anderen Worten, das Auslaufen des Antriebsmotors 11 und seines Getriebes 15 findet innerhalb des Freigangs Δx statt.

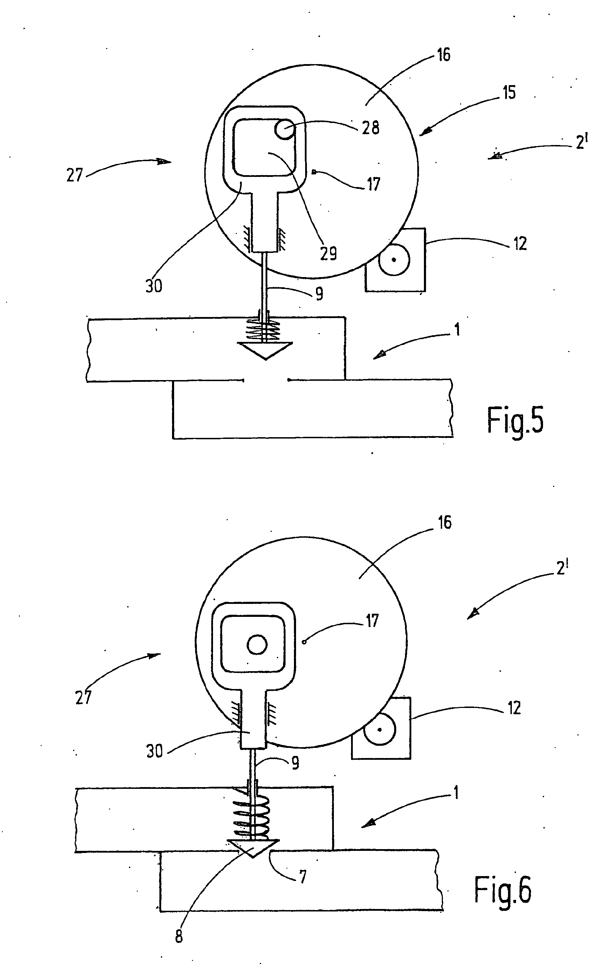

Die Figuren 5 und 6 veranschaulichen eine abgewandelte Ausführungsform des erfindungsgemäßen Ventilantriebs 2'. So weit dieser gleiche oder funktionsähnliche Bauelemente aufweist wie der vorstehend beschriebene Ventilantrieb sowie hinsichtlich des Gasventils 1 wird auf die vorige Beschreibung verwiesen.

Ergänzend gilt, dass anstelle eines Zugmittels 21 zur Realisierung des Freigangs Δx eine Getriebelose 27 angewendet worden ist. Diese wird durch einen an dem Zahnrad 16 exzentrisch gelagerten Zapfen 28 oder sonstigen Mitnehmer gebildet, der in einer Öffnung 29 eines mit der Ventilspindel 9 verbundenen Abtriebs 30 sitzt. Die Öffnung 29 ist bezogen auf die Bewegungsrichtung des Zapfens 28 größer als der Bremsweg des Schrittmotors 12 mit dem Getriebe 15. Dadurch bleiben die Ventilspindel 9 und der Abtrieb 30 stehen, wenn das Ventilverschlussglied 8, wie Figur 6 zeigt auf dem Ventilsitz 7 aufsitzt, wobei der Schrittmotor 12 und mit ihm das Zahnrad 16 noch zumindest für den Bremsweg weiter laufen können.

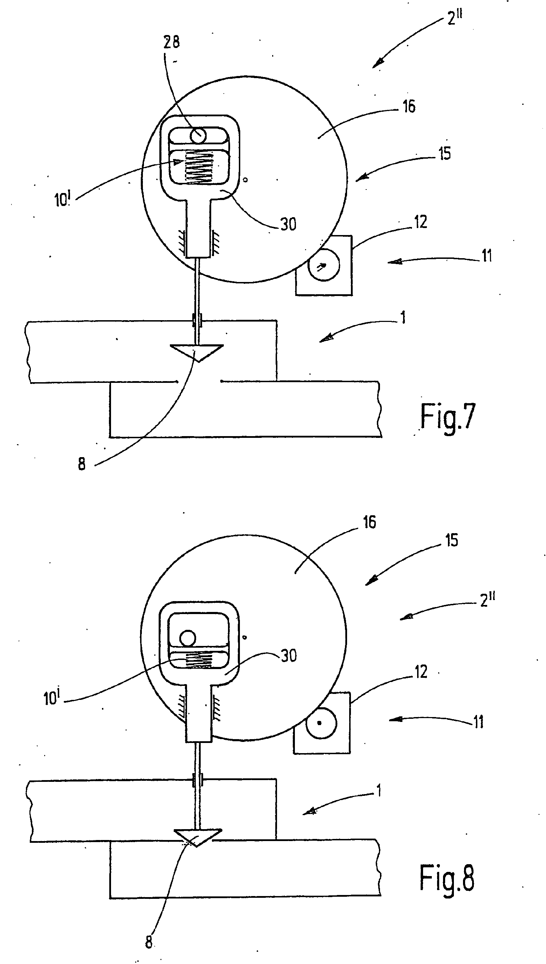

Eine weitere Abwandlung der in den Figuren 5 bis 6 veranschaulichten Ausführungsform ergibt sich aus den Figuren 7 und 8 zu der die vorstehende Beschreibung entsprechend gilt. Ergänzend wird darauf hingewiesen, dass die Schließfeder 20' dieses Ventilantriebs 2" hier in dem Abtrieb 30 angeordnet ist. Sie klemmt den Zapfen 28 in dem Abtrieb 30 spielfrei ein, so dass das Ventilverschlussglied 8 der Bewegung des Zahnrads, d.h. der Vertikalbewegungskomponente des Zapfens 28 unmittelbar folgt. Sobald das Ventilverschlussglied 8 gemäß Figur 8 in Schließstellung angekommen ist, kann der Zapfen 28 nur noch gegen die Kraft der Schließfeder 10' weiterlaufen, wodurch diese gespannt und die Bewegungsenergie des Getriebes und des Antriebsmotors 11 abgebaut wird.

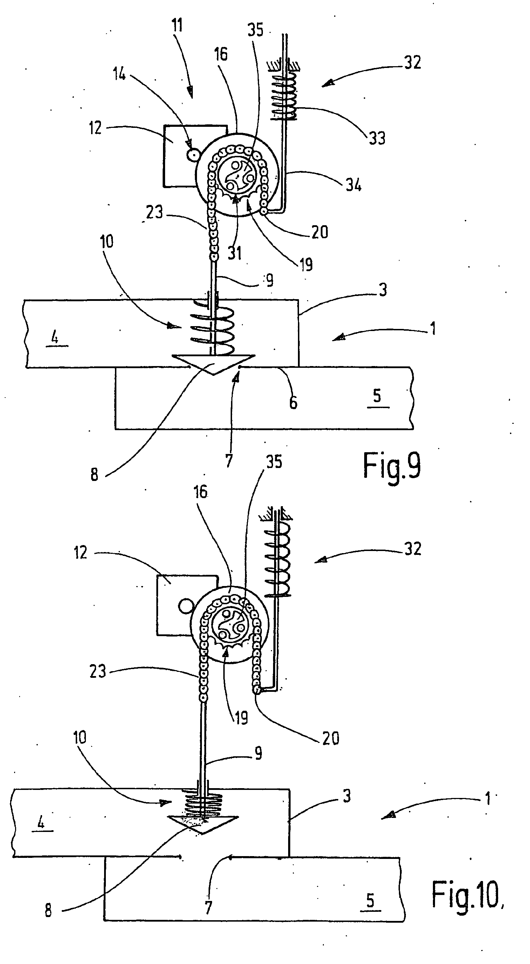

In Figur 9 ist eine bevorzugte Ausführungsform des Gasventils 1 veranschaulicht. Diese beruht weitgehend auf der Ausführungsform nach den Figuren 1 und 2. Auf die entsprechenden Teile der Figurenbeschreibung wird unter Zugrundelegung gleicher Bezugszeichen verwiesen.

Bei dem Gasventil 1 nach Figur 9 und 10 ist, wie schon vorstehend beschrieben, als Antriebsmotor 11 beispielsweise ein Schrittmotor 12 vorgesehen. Dieser treibt wiederum mittels eines Ritzels 14 das Zahnrad 16. Dieses Zahnrad 16 ist über eine Freilaufkupplung 31 mit dem Kettenrad 19 verbunden. Mit dem Rad 19 steht wiederum die Rollenkette 23 in formschlüssigem Eingriff. Anstelle des Kettenrads 19 und der Rollenkette 23 können auch andere formschlüssig zusammenwirkende Getriebemittel, wie beispielsweise ein Zahnriemen und eine Zahnriemenscheibe, zur Anwendung kommen. Die Freilaufkupplung 31 stellt in einer Drehrichtung eine Kraft übertragende Verbindung zwischen dem Zahnrad 16 und dem Rad 19 her, während sie den Kraftschluss bei Momentübertragung in Gegenrichtung aufhebt. Insbesondere ist die Freilaufkupplung 31 so orientiert, dass sie in Ventilöffnungsrichtung wirkende Antriebsmomente von dem Zahnrad 16 auf das Rad 19 überträgt, während bei Drehmomentumkehr keine Kopplung gegeben ist. Bei der Ausführungsform nach Figur 9 bewirkt eine Drehung des Zahnrads 16 im Uhrzeigersinn eine Mitnahme des Rads 19 ebenfalls in Uhrzeigerrichtung. Hingegen kann das Rad 19 beliebig in Uhrzeigerrichtung gedreht werden, ohne das Zahnrad 16 mitzunehmen. In Figur 9 ist schematisch ein Klemmrollenfreilauf veranschaulicht. Es können aber auch alle anderen Arten von Freilaufkupplungen zur Anwendung kommen.

Die Rollenkette 23 ist anders als bei der Ausführungsform nach Figur 1 nicht an dem Rad 19 befestigt. Vielmehr läuft sie über dieses Rad 19, wobei ihr Ende 20 mit einer Spanneinrichtung 32 verbunden ist. Zu dieser gehört ein Federmittel, zum Beispiel in Gestalt einer Zugfeder, oder auch, wie in Figur 9 veranschaulicht, einer Druckfeder 33, die über ein geeignetes Kraftübertragungsmittel, wie beispielsweise eine Stange 34, mit dem Ende 20 verbunden ist, um dieses von dem Rad 19 weg zu ziehen. Im Ergebnis wirkt somit die Kraft der Druckfeder der Kraft der Schließfeder entgegen. Im bevorzugten Ausführungsfall ist deshalb die Schließfeder 10 stärker als die Druckfeder 33.

Zum Öffnen des Gasventils 1 wird der Schrittmotor 12 so angesteuert, dass das Zahnrad 16 in Öffnungsrichtung, d.h. bei Figur 9 im Uhrzeigersinne dreht. Die Freilaufkupplung 31 nimmt das Rad 19 mit. Die Rollenkette 23 wird aus Sicht der Ventilspindel 9 aufgewickelt, wodurch das Ventilverschlussglied 8 von dem Ventilsitz 7 abgehoben wird. Die von dem Rad 19 ablaufende Kette wird dabei von der Spanneinrichtung 32 straff gehalten, wie aus Figur 10 hervorgeht.

Wird der Schrittmotor 12 nun stromlos bewirkt die Schließfeder 10 einen Schnellschluss des Gasventils 1. Dabei geht das Gasventil 1 von dem Zustand nach Figur 10 in den Zustand nach Figur 9 über. Die Schließfeder 10 treibt dabei über die Ventilspindel 9 und die Rollenkette 23 das Rad 19 im Gegenuhrzeigesinne an. Über die zunächst noch im Eingriff befindliche Freilaufkupplung 31 wird dabei auch das Zahnrad 16 in Gegenuhrzeigersinne angetrieben. Dieses treibt den Schrittmotor 12 an, der somit in Schließrichtung läuft.

Trifft das Ventilverschlussglied 8 auf den Ventilsitz auf, stoppt es abrupt. Entsprechend bleibt auch das Rad 19 stehen. Die Freilaufkupplung 31 öffnet aber und gestattet ein Weiterdrehen des Zahnrads 16 im Gegenuhrzeigersinn. Dadurch kann die in dem Zahnrad 16 und insbesondere in dem Rotor des Schrittmotors 12 gespeicherte kinetische Energie allmählich abgebaut werden. Die Freilaufkupplung 31 erbringt somit einen beliebig großen Freilgang, d.h. die mit dem Zahnrad 16 drehfest verbundene Welle 35 kann sich um einen beliebig großen Drehwinkel in Gegenuhrzeigerrichtung und somit in Schließrichtung gegen das Rad 19 drehen. Wenn die Welle 35 als eingangsseitige Kupplungshälfte der Freilaufkupplung 31 und das Rad 19 als ausgangsseitige Kupplungshälfte der Freilaufkupplung 31 angesehen werden, hat die Kupplungseingangshälfte bezüglich der Drehmomentübertragung in Ventilschließrichtung einen beliebig großen Freigang. Dieser kann auch als "Freilauf" Δα bezeichnet werden.

Das in Figur 11 schematisch dargestellte Gasventil 1 ist über die Schließfeder 10 gegen den Ventilsitz 7 vorgespannt. Die Schließstellung des Ventilverschlussgliedes 8 ist gestrichelt dargestellt, während die Offenstellung mit durchgezogenen Linien gezeigt ist. Die Schließfeder 10 ist zwischen dem Ventilverschlussglied 8 und dem Ventilgehäuse 3 angeordnet. Die Ventilspindel 9 ist auf der der Schließfeder 10 entgegengesetzten Seite des Ventilverschlussgliedes 8 vorgesehen und durchsetzt die vom Ventilsitz 7 umschlossene Ventilöffnung.

Der Ventilspindel 9 ist ein weiteres Ausführungsbeispiel eines Ventilantriebs 2 zugeordnet, das einen in Richtung der Längsachse L der Ventilspindel 9 bewegbaren Stößel 36 aufweist. Der Stößel 36 ragt beispielsgemäß in das Ventilgehäuse 3 des Gasventils 1 hinein. Er ist in einem Antriebsgehäuse 37 axial verschiebbar gelagert. Das Antriebsgehäuse 37 weist hierfür eine Buchse 38 auf, in der ein den Stößel 36 umschließendes Gleitlager 39 angeordnet ist. In der Buchse 38 sitzt auch eine Dichtungsanordnung 40, die den Stößel 36 in Umfangsrichtung gasdicht umschließt. Die Buchse 38 kann ein Außengewinde aufweisen, mittels dem der Ventilantrieb 2 in das Ventilgehäuse 3 eingeschraubt werden kann. Zur gasdichten Verbindung können zwischen Ventilgehäuse 3 und Buchse 38 weitere Dichtungen vorhanden sein.

Die Buchse 38 ist koaxial zum Stößel 36 angeordnet. Der Stößel 36 durchsetzt die Buchse 38 vollständig. Sein freies Ende 41 ist der Ventilspindel 9 zugeordnet. Ausgehend von seinem freien Ende 41 erstreckt sich der Stößel 36 durch die Buchse 38 hindurch weiter in das Antriebsgehäuse 37 hinein. Im Anschluss an die Buchse 38 kann ein Faltenbalg 42 um den Stößel 36 herum angeordnet sein. Auf diese Weise kann der Teil des Stößels 36, der bei dessen Axialbewegung in die Buchse 38 hinein verschoben wird, vor Verschmutzung geschützt werden. Die Dichtungsanordnung 40 sowie das Gleitlager 39 sind durch diese Maßnahme vor Verschleiß geschützt.

Im Inneren des Antriebsgehäuses 37 ist der Stößel 36 fest mit einer Gewindespindel 43 verbunden. Die Gewindespindel 43 und der Stößel 36 können auch einstückig aus einem einheitlichen Material ohne Naht- oder Fügestellen ausgeführt sein. Die Gewindespindel 43, der Stößel 36 sowie die Ventilspindel 9 sind koaxial zur Längsachse L angeordnet. Auf der Gewindespindel 43 ist eine Spindelmutter 44 drehbar angeordnet. Die Spindelmutter 44 ist drehfest mit dem Rotor 45 des Schrittmotors 12 verbunden. Der Rotor 45 ist über eine Lageranordnung 51 im Inneren des Antriebsgehäuses 37 um die Längsachse L drehbar gelagert. Koaxial um den Rotor 45 ist der Stator 46 am Antriebsgehäuse 37 vorgesehen.

An der Gewindespindel 43 ist ferner eine Verdrehsicherung 47 vorhanden. Die Verdrehsicherung 47 dient dazu, bei einer Drehung der Spindelmutter 44 das Mitdrehen der Gewindespindel 43 zu verhindern, so dass durch die Drehung der Gewindemutter 44 eine axiale Bewegung der Gewindespindel 43 verursacht wird. Die Verdrehsicherung 47 weist hierfür ein Drehfest mit der Gewindespindel 43 oder dem Stößel 36 verbundenes Sicherungselement 48 auf. Das Sicherungsteil 48 weist zumindest einen Sicherungsvorsprung 49 auf, der radial von der Längsachse L wegragt und in eine Sicherungsausnehmung 50 am Antriebsgehäuse 37 eingreift. In Umfangsrichtung um die Längsachse L gesehen, entspricht die Breite des Sicherungsvorsprungs 49 in etwa der Breite der Sicherungsausnehmung 50. Parallel zur Längsachse L ist die Sicherungsausnehmung 50 ausreichend groß, so dass der Sicherungsvorsprung 49 bei der axialen Verstellbewegung der Gewindespindel 43 in Richtung der Längsachse L verschoben werden kann. Beim Ausführungsbeispiel ist die Sicherungsausnehmung 50 von einem in Richtung der Längsachse L verlaufenden Schlitz gebildet. Beispielsgemäß sind zwei gegenüber der Längsachse L diametral entgegengesetzte Sicherungsvorsprünge 49 vorhanden, denen jeweils ein Sicherungsschlitz 50 zugeordnet ist.

Der Ventilantrieb und das zugeordnete Gasventil 1 gemäß Figur 11 arbeiten wie folgt:

Zum Öffnen des Gasventils 1 wird der Schrittmotor 12 bestromt, wodurch sich die Gewindemutter 44 dreht. Die Gewindespindel 43 wird dadurch in Richtung der Längsachse L verschoben, so dass sich das freie Ende 41 des Stößels 36 vom Antriebsgehäuse 37 bzw. der Buchse 38 entfernt und mit der Ventilspindel 9 zur Anlage gelangt. Bei einer fortgesetzten Rotorbewegung des Schrittmotors 12 wird das Ventilverschlussglied 8 gegen die Kraft der Schließfeder 10 vom Ventilsitz 7 entfernt und das Gasventil 1 geöffnet. Um das Ventilverschlussglied 8 in seiner Offenstellung zu halten, muss der Schrittmotor 12 ein Motormoment aufbringen, das der Schließkraft der Schließfeder 10 entspricht. Der Schrittmotor 12 kann abhängig von seiner Drehstellung verschieden große Strömungsöffnungen am Gasventil 1 einstellen.

Das Umschalten von der Offenstellung in die Schließstellung des Ventilverschlussgliedes 8 kann durch Abschalten des Motorstroms erfolgen. Das Getriebe 15 ist selbsthemmungsfrei ausgeführt. Im vorliegenden Fall ist hierfür die Gewindesteigung der Gewindespindel 43 so groß gewählt, dass die Schließkraft der Schließfeder 10 ausreicht, um die Gewindespindel 43 mittels der Ventilspindel 9 und dem Stößel 36 axial zu verschieben und dabei die Spindelmutter 44 und den Rotor 45 zu drehen. Sobald das Ventilverschlussglied 8 am Ventilsitz 7 anliegt, übt die Ventilspindel 9 auf den Stößel 36 keine weitere Kraft mehr aus. Die beschleunigten Teile des Ventilantriebs 2, insbesondere die rotierende Gewindemutter 44 und der rotierende Rotor 45 werden aber nicht schlagartig abgebremst, sondern drehen sich so lange weiter, bis sie aufgrund von Reibung und anderen Widerständen zum Stillstand gelangen. Dadurch entfernt sich der Stößel 36 von der Ventilspindel 9. Das Getriebe 15 verfügt somit über einen Freigang, der es erlaubt einen Bremsweg oder Verzögerungsweg des Schrittmotors 12 vorzusehen, ohne dass dadurch die Schließkraft des Ventilverschlussgliedes 8 beeinflusst würde.

Wenn ein schnelles Schließen des Gasventils 1 erforderlich ist, kann die Schließbewegung durch eine entsprechende Rotation des Rotors 45 des Schrittmotors 12 unterstützt werden.

In der Schließstellung des Ventilgliedes 8 befindet sich das freie Ende 41 des Stößels 36 in etwa im Bereich des axialen Endes der Buchse 38. Die Gewindespindel 43 ist entsprechend in Richtung der Längsachse L vom Ventilverschlussglied 8 entfernt. Dies ist in Figur 11 gestrichelt dargestellt.

In Figur 12 ist schematisch eine Abwandlung des Ausführungsbeispiels aus Figur 11 veranschaulicht, wobei lediglich ein Teil des Ventilantriebs 2 gezeigt ist. Der Unterschied zum Ausführungsbeispiel nach Figur 11 besteht darin, dass die Gewindespindel 43 drehfest mit dem Rotor 45 des Schrittmotors 12 verbunden ist, während die Gewindemutter 44 axial in Richtung der Längsachse L verschiebbar auf der Gewindespindel 43 sitzt. Der Stößel 36 ist fest mit der Spindelmutter 44 verbunden. Das Sicherungsteil 48 der Verdrehsicherung 47 ist ebenfalls mit der Spindelmutter 44 verbunden. Bei einer Drehung der Gewindespindel 43 bewegt sich die Spindelmutter 44 zusammen mit dem Stößel 36 in Richtung der Längsachse L.

Die Funktionsweise dieses Ventilantriebs 2 entspricht der des Ausführungsbeispiels nach Figur 11.

Ein insbesondere zur Notabschaltung eingerichteter bei Stromausfall schnell schließender Ventilantrieb 7 weist zwischen einem (linearen oder rotatorischen) Antriebsmotor 11 und einem Ventilverschlussglied 8 ein Getriebe 15 mit einem Freigang Δx auf, der bei der bevorzugten Ausführungsform durch Erschlaffung eines Zugmittels realisiert wird. Der Ventilantrieb öffnet das Ventil gegen die Kraft einer Schließfeder 10 über das Zugmittel 21. Läuft der Ventiltrieb hingegen mit hoher Stellgeschwindigkeit in Schließrichtung und setzt das Ventilverschlussglied 8 auf dem Ventilsitz 7 auf, kann es stehen bleiben, ohne den Ventiltrieb bremsen zu müssen. Dieser kann unter Erschlaffung des Zugmittels 21 noch etwas weiterlaufen, wobei das Zugmittel 21, weil es nicht drucksteif ist, seitlich ausweicht und somit den Freigang realisiert.

### Bezugszeichen

- 1: Gasventil
- 2: Ventilantrieb
- 3: Ventilgehäuse
- 4: Eingang
- 5: Ausgang
- 6: Gehäusewand
- 7: Ventilsitz
- 8: Ventilverschlussglied
- 9: Ventilspindel
- 10: Schließfeder
- 11: Antriebsmotor
- 12: Schrittmotor
- 13: Welle
- 14: Ritzel
- 15: Getriebe
- 16: Zahnrad
- 17: Achse (in mathematischem Sinne)
- 18: Positionssensor
- 19: Rad
- 20: Ende
- 21: Zugmittel
- 22: Ende
- 23: Rollenkette
- 24: Spanneinrichtung
- 25: Rolle
- 26: Feder
- 27: Getriebelose
- 28: Zapfen
- 29: Öffnung
- 30: Abtrieb
- 31: Freilaufkupplung
- 32: Spanneinrichtung
- 33: Druckfeder
- 34: Stange
- 35: Eingangswelle
- 36: Stößel
- 37: Antriebsgehäuse
- 38: Buchse
- 39: Gleitlager
- 40: Dichtungsanordnung
- 41: Freies Ende v. 36
- 42: Faltenbalg
- 43: Gewindespindel
- 44: Spindelmutter
- 45: Rotor
- 46: Stator
- 47: Verdrehsicherung
- 48: Sicherungsteil
- 49: Sicherungsvorsprung
- 50: Sicherungsausnehmung

- Δα: Freilauf
- Δx: Freigang
- L: Längsachse

## Patentansprüche

1. Ventilantrieb (2) für ein Ventil (1), insbesondere für ein Gasventil,
wobei das Ventil (1) einen Ventilsitz (7) und ein Ventilverschlussglied (8) aufweist, das im Schließzustand auf dem Ventilsitz (8) ruht und in Offenstellung von dem Ventilsitz (7) weg bewegt ist,
mit einer dem Ventilverschlussglied (8) zugeordneten Schließfeder (10), die eine auf das Schließen des Ventilverschlussgliedes (8) gerichtete Kraft erzeugt und das Ventilverschlussglied (8) auf den Ventilsitz (7) hin vorspannt,
mit einem Antriebsmotor (12) und
mit einem Getriebe (15) zur Übertragung der Antriebsbewegung von dem Antriebsmotor (12) auf das Ventil (1),
wobei das Getriebe (15) zur Übertragung einer Ventilöffnungsbewegung von dem Antriebsmotor (12) auf das Ventilverschlussglied (8) einen Stößel (36) aufweist,
wobei das Getriebe (15) eine auf einer Spindel (43) gelagerte Spindelmutter (44) aufweist, wobei der Stößel an der Spindel (43) oder an der Spindelmutter (44) vorgesehen ist,
wobei das Getriebe (15) in Richtung des Schließens des Ventils (1) einen Freigang (Δx) oder Freilauf (Δα) aufweist, derart, dass sich der Stößel (36) von der Ventilspindel (9) entfernt, wenn das Ventilverschlussglied (8) am Ventilsitz (7) anliegt.

2. Ventilantrieb nach Anspruch 1, **dadurch gekennzeichnet, dass** der Antriebsmotor (12) ein drehender Antrieb ist.

3. Ventilantrieb nach Anspruch 1, **dadurch gekennzeichnet, dass** der Antriebsmotor (12) ein Schrittmotor (12) ist.

4. Ventilantrieb nach Anspruch 1, **dadurch gekennzeichnet, dass** das Getriebe (15) ein Untersetzungsgetriebe ist.

5. Ventilantrieb nach Anspruch 1, **dadurch gekennzeichnet, dass** an das Getriebe (15) ein Positionssensor (18) angeschlossen ist.

6. Ventilantrieb nach Anspruch 1, **dadurch gekennzeichnet, dass** das Getriebe (15) selbsthemmungsfrei ausgeführt ist.

7. Ventilantrieb nach Anspruch 1, **dadurch gekennzeichnet, dass** der Stößel (36) gasdicht aus einem Gehäuse (37) des Ventilantriebs (2) herausgeführt ist.

8. Ventilantrieb nach Anspruch 1, **dadurch gekennzeichnet, dass** das Getriebe (15) eine Getriebelose (Δx) umfasst.

9. Ventilantrieb nach Anspruch 1, **dadurch gekennzeichnet, dass** der Freigang (Δx) mindestens so groß ist wie ein von dem Antriebsmotor (12) festgelegter Bremsweg (B).

## Claims

1. Valve drive (2) for a valve (1), in particular for a gas valve,
wherein the valve (1) has a valve seat (7) and a valve locking member (8), which in the closed state rests on the valve seat (8) and in the open position is moved away from the valve seat (7),
with a closing spring (10), which is associated with the valve locking member (8) and which generates a force directed towards closure of the valve locking member (8) and biases the valve locking member (8) towards the valve seat (7),
with a drive motor (12) and
with a gear (15) for transmitting the drive movement from the drive motor (12) to the valve (1),
wherein the gear (15) has a slide (36) for transmitting a valve opening movement from the drive motor (12) to the valve locking member (8),
wherein the gear (15) has a spindle nut (44) mounted on a spindle (43), wherein the slide is provided on the spindle (43) or on the spindle nut (44),
wherein the gear (15) has a clearance (Δx) or free-wheel (Δα) in the direction of closure of the valve (1) such that the slide (36) moves away from the valve spindle (9) when the valve locking member (8) abuts against the valve seat (7).

2. Valve drive according to claim 1, **characterised in that** the drive motor (12) is a rotating drive.

3. Valve drive according to claim 1, **characterised in that** the drive motor (12) is a stepping motor (12).

4. Valve drive according to claim 1, **characterised in that** the gear (15) is a reduction gear.

5. Valve drive according to claim 1, **characterised in that** a position sensor (18) is connected to the gear (15).

6. Valve drive according to claim 1, **characterised in that** the gear (15) is configured without self-locking.

7. Valve drive according to claim 1, **characterised in that** the slide (36) is directed out of a housing (37) of the valve drive (2) in a gastight manner.

8. Valve drive according to claim 1, **characterised in that** the gear (15) includes a gearless unit (Δx).

9. Valve drive according to claim 1, **characterised in that** the clearance (Δx) is at least as large as a brake path (B) determined by the drive motor (12).

## Revendications

1. Actionneur de vanne (2) pour une vanne (1), en particulier pour une vanne de gaz,
la vanne (1) présentant un siège de vanne (7) et un organe obturateur de vanne (8) qui, à l'état fermé, repose sur le siège de vanne (8) et, dans la position ouverte, est éloigné du siège de vanne (7),
comprenant un ressort de fermeture (10) qui est associé à l'organe obturateur de vanne (8) et produit une force dirigée dans le sens de la fermeture de l'organe obturateur de vanne (8) et met l'organe obturateur de vanne (8) sous précontrainte en direction du siège de vanne (7),
comprenant un moteur d'entraînement (12) et
comprenant un dispositif de transmission (15) destiné à transmettre le mouvement d'entraînement du moteur d'entraînement (12) à la vanne (1),
le dispositif de transmission (15) présentant un poussoir (36) en vue de transmettre un mouvement d'ouverture de vanne du moteur d'entraînement (12) à l'organe obturateur de vanne (8),
le dispositif de transmission (15) présentant un écrou de vis (44) monté sur une vis (43), le poussoir étant prévu sur la vis (43) ou sur l'écrou de vis (44),
le dispositif de transmission (15) présentant un déplacement libre (Δx) ou une course libre (Δα) dans le sens de la fermeture de la vanne (1), de telle sorte que le poussoir (36) s'éloigne de la tige de vanne (9) lorsque l'organe obturateur de vanne (8) est appliqué contre le siège de vanne (7).

2. Actionneur de vanne selon la revendication 1, **caractérisé en ce que** le moteur d'entraînement (12) est un dispositif d'entraînement rotatif.

3. Actionneur de vanne selon la revendication 1, **caractérisé en ce que** le moteur d'entraînement (12) est un moteur pas à pas.

4. Actionneur de vanne selon la revendication 1, **caractérisé en ce que** le dispositif de transmission (15) est un réducteur.

5. Actionneur de vanne selon la revendication 1, **caractérisé en ce qu'**un capteur de position (18) est connecté au dispositif de transmission (15).

6. Actionneur de vanne selon la revendication 1, **caractérisé en ce que** le dispositif de transmission (15) est réalisé sans autoblocage.

7. Actionneur de vanne selon la revendication 1, **caractérisé en ce que** le poussoir (36) sort de manière étanche au gaz d'un carter (37) de l'actionneur de vanne (2).

8. Actionneur de vanne selon la revendication 1, **caractérisé en ce que** le dispositif de transmission (15) comporte un jeu de transmission (Δx).

9. Actionneur de vanne selon la revendication 1, **caractérisé en ce que** le déplacement libre (Δx) est au moins aussi grand qu'une distance de freinage (B) déterminée par le moteur d'entraînement (12).
